Europäisches Patentamt

European Patent Office

Office européen des brevets

(11) Publication number: 0 459 625 B1

# EUROPEAN PATENT SPECIFICATION

(45) Date of publication of patent specification: 21.09.94  (51) Int. Cl.⁵: **C01B 15/10**

(21) Application number: **91303768.5**

(22) Date of filing: **25.04.91**

(54) Process for producing stabilized sodium percarbonate.

(30) Priority: **25.05.90 JP 134109/90**

(43) Date of publication of application:
**04.12.91 Bulletin 91/49**

(45) Publication of the grant of the patent:
**21.09.94 Bulletin 94/38**

(84) Designated Contracting States:
**BE DE ES FR GB IT NL SE**

(56) References cited:
**DE-A- 2 712 138**
**FR-A- 2 371 379**
**GB-A- 1 575 792**

**CHEMICAL ABSTRACTS vol. 102, no. 12, 25
March 1985, page 86, abstract no. 97329z,
Columbus, Ohio, US; & JP - A - 59193999
(KAO CORP.) 02.11.1984 (cat. D)**

**PATENT ABSTRACTS OF JAPAN vol. 8, no
187 (C-240)(1624), 28 August 1984; & JP - A -
5983912 (KAO SEKKEN K.K.) 15.05.1984**

(73) Proprietor: **MITSUBISHI GAS CHEMICAL COM-
PANY, INC.
No. 5-2, Marunouchi 2-chome
Chiyoda-ku, Tokyo (JP)**

(72) Inventor: **Onda, Masayoshi
7-41-A-3, Ishizukacho
Yokkaichi-shi (JP)**
Inventor: **Hiro, Yasuo
10-6, Higashiejimacho
Suzuka-shi (JP)**
Inventor: **Ito, Akira
18-7, Matsubacho-7-chome
Kashiwa-shi (JP)**
Inventor: **Hisano, Katsuhiko
85, Nishihinocho
Yokkaichi-shi (JP)**

(74) Representative: **Baillie, Iain Cameron et al
c/o Ladas & Parry
Altheimer Eck 2
D-80331 München (DE)**

Rank Xerox (UK) Business Services
(3.10/3.09/3.3.3)

**Description**

The present invention relates to a process for producing a sodium percarbonate excellent in storage stability. In more particular, it relates to a process for producing a stabilized sodium percarbonate which comprises separately spraying an aqueous boric acid solution and an aqueous alkali metal silicate solution onto sodium percarbonate with simultaneous evaporation of water.

It is well known that peroxygenated compounds such as sodium percarbonate and sodium perborate can be incorporated as a bleaching constituent into powdery detergent compositions. Sodium percarbonate, sodium perborate, and the like, in washing, go into solution and decompose to exhibit their bleaching action. In this instance, sodium perborate dissolves only slowly at low temperatures; accordingly, under the present circumstances of this country, where cold or lukewarm water is mainly used in washing, it is rather unsatisfactory from the view point of bleaching effect as a bleaching constituent to be incorporated into detergents.

On the other hand, sodium percarbonate dissolves rapidly and can fully exhibit its bleaching effect at low temperatures, so that the demand for sodium percarbonate is increasing rapidly in recent years.

However, sodium percarbonate, as compared with sodium perborate, is sensitive to moisture and is relatively liable to be decomposed even at room temperatures by water contained in detergent compositions or by moisture and water present in the air. Further, detergent compositions usually contain substances which promote the decomposition of sodium percarbonate, such as zeolite, and sodium percarbonate tends to be decomposed by contacting with such substances. Accordingly, various methods have so far been proposed to prevent or suppress the decomposition of sodium percarbonate and thereby to obtain a stabilized sodium percarbonate.

Most promising among them is the method which consists of coating sodium percarbonate particles with various coating agents. As such coating agents, there have been proposed (1) organic substances including paraffin, vinylidene chloride resin, etc. and (2) inorganic substances including silicates, perborates, borates, boric acid, etc.

A known method of coating with boric acid is that disclosed in Brit.Patent No. 1,575,792. This method comprises spraying an aqueous boric acid solution onto sodium percarbonate particles with simultaneous evaporation of water, whereby the stability of sodium percarbonate can be improved. However, the stability of sodium percarbonate coated with boric acid alone is not sufficiently high, and further improvement of the stability is desired.

British Patent No. 1,575,792 describes that the coating agent may contain, in addition to boric acid, other compounds which are known to have an effect of stabilizing peroxides, and exemplifies alkali metal salts of phosphoric acid and silicic acid, in particular, as such compounds; but it teaches nothing about the concrete method of using such compounds in practice. Japanese Patent Application Kokai (Laid-open) No. 59-193,999 discloses a bleaching detergent composition comprising a sodium percarbonate whose surface has been coated with a coating agent at least containing both a borate and an alkali metal silicate and describes, in its Comparative Example, an example of using boric acid and sodium silicate in combination; however, no detail description is given about the method for doing it in practice, and the effect of said combined use is not so marked.

Moreover, when boric acid and an alkali metal silicate are dissolved together in such a solvent as water, silicon oxide may be formed as a gel-like precipitate depending on the mixing ratio or the concentration, particularly at high concentrations. Accordingly, in using the two in combination, it is not always possible to adopt an optional composition and optional solution concentration of the coating agent as desired.

When an aqueous solution of boric acid and an alkali metal silicate is sprayed onto sodium percarbonate particles to coat the particles therewith and produce a stabilized sodium percarbonate, if the boric acid and the alkali metal silicate are dissolved together in water respectively in a high concentration, silicon oxide is formed as described above as a gel-like precipitate (cf. Referential Example 1 described later), which makes it impossible to coat the sodium percarbonate particles by spraying the solution. Thus, when boric acid and an alkali metal silicate are dissolved together in water, the concentrations of the two components must be low. Such low concentrations, however, are economically disadvantageous because of a great amount of thermal energy required for drying the sodium percarbonate particles after being sprayed, and further it lengthens the time required for drying, which results in the loss of the active oxygen in the sodium percarbonate by decomposition. Therefore, in order to practice the method in an industrially advantageous way, it is desirable that the concentrations of boric acid and the alkali metal silicate are as high as possible, which however involves a serious problem in that sufficiently high concentrations cannot be used because, as discribed above, if boric acid and an alikali metal silicate are dissolved together in high concentrations in water a gel-like precipitate will be formed.

The present inventors have made extensive study on the process for coating sodium percarbonate with a boric acid and an alkali metal silicate. Resultantly, it has been found that when an aqueous boric acid solution and an aqueous alkali metal silicate solution are separately sprayed onto sodium percarbonate particles kept in a fluidized state, the boric acid and alkali metal silicate are well extended over the sodium percarbonate particles to form a uniform coating thereon, with no difficulty in coating the sodium percarbonate particles occurring at all which might be caused by gel-like precipitation of silicon oxide, even if an aqueous boric acid solution of a high concentration and an aqueous alkali metal silicate solution of a high concentration are used, thus the problems mentioned above can be overcome, and the stability of sodium percarbonate can be drastically improved. The present invention has been accomplished on the basis of above finding.

Thus, according to the present invention, there is provided a process for producing a stabilized sodium percarbonate comprising spraying an aqueous boric acid solution and an aqueous alkali metal silicate solution separately onto sodium percarbonate particles kept in a fluidized state to coat the sodium percarbonate particles with the boric acid and alkali metal silicate.

The process of the present invention comprises spraying an aqueous boric acid solution and an aqueous alkali metal silicate solution from separate nozzles simultaneously or in succession onto sodium percarbonate particles kept in a fluidized state to coat the particles with the coating agents. The process is features in that, contrary to the expectation that even when an aqueous boric acid solution of a high concentration and an aqueous alkali metal silicate solution of a high concentration are sprayed separately, in case where the two spray solutions come to mingle with each othr silicon oxide will immediately precipitate in the form of gel to make said coating difficult, an excellent coating can be obtained as described above. Another feature of the process of the present invention is that an optional concentration of the coating agent solution and optional mixing ratio of the coating agents can be adopted as desired utterly without the need of considering the gel-like precipitation of silicon oxide as described above.

In the process of the present invention, it is unfavorable that too much coating agent solution adheres onto the surface of sodium percarbonate particles because it causes agglomeration of the particles; so that it is necessary to remove the excess of water from the surface of sodium percarbonate particles (this procedure being hereinafter sometimes called "drying") simultaneously with spraying the coating agent solutions onto the particles. Usually, the amount of water on the surface of sodium percarbonate particles during spraying is preferably kept at about 0.5 - 4% by weight. The above object can be achieved in the process of the present invention by keeping the temperature of the sodium percarbonate particles constant and maintaining the particles in a fluidized state, in other words by introducing a hot air of a predetermined temperature at a predetermined flow rate into the sodium percarbonate particles while spraying a coating agent solution of a predetermined temperature onto the particles.

In this case, the temperature and the flow rate of hot air, the temperature and the spray flow rate of coating agent solution, and the concentration of coating agent in the solution are correlated with one another. For example, if the temperature and the flow rate of hot air are decided, then the concentration, the temperature and the spray flow rate of coating agent solution are determined resultantly. Thus, according to the process of the present invention, the spraying of the coating agent solutions and the drying are performed simultaneously, whereby the amount of water on the sodium percarbonate particle surface can be favorably controlled.

DETAILED DESCRIPTION OF THE INVENTION

The simultaneous spraying and drying are preferably performed such that the temperature of sodium percarbonate may be maintained in a predetermined range. The temperature of sodium percarbonate during the spraying-drying is 30 - 100°C, preferably 35 - 95°C, more preferably 40 - 90°C, most preferably 45 - 90°C.

When the temperature of sodium percarbonate is too low, it causes agglomeration of sodium percarbonate particles. When the temperature of sodium percarbonate is too high, sodium percarbonate tends to decompose; further, crystal growth of the coating agent occurs, resulting in poor extensibility and insufficient coating effect of the coating agent.

The solvents for boric acid and an alkali silicate are selected from those which can dissolve the two. most preferable is water, which dissolves the two well, is safe and inexpensive.

The concentration of boric acid should be not higher than its saturated solution concentration at the temperature used. When the concentration is too low, a long time is required for drying, leading to the decomposition of sodium percarbonate, and further a large amount of heat is required for drying. When the concentration is too high, boric acid tends to deposit and cause blockade in the piping and the nozzle. From such viewpoints, the concentration of boric acid is preferably 10 - 95%, more preferably 30 - 90%, most preferably 50 - 90% of the saturated solution concentration.

The temperature of the boric acid solution is preferably rather high to increase the solubility and to facilitate the drying. Too high a temperature, however, causes the decomposition of sodium percarbonate. In this respect, the temperature of the boric acid solution is selected from the range of 10 - 120°C, preferably 30 - 100°C, more preferably 50 - 100°C.

The amount of boric acid as the coating agent is usually 0.3 - 20% by weight, preferably 0.5 - 10% by weight, more preferably 1 - 8% by weight, most preferably 2 - 8% by weight relative to sodium percarbonate particles of the base material.

Examples of alkali metal silicates which may be used include sodium salts such as sodium metasilicate, sodium orthosilicate, water glasses No. 1, No. 2 and No. 3, etc., potassium metasilicate, potassium orthosilicate, and the like. Particularly among them, water glasses No. 1, No. 2 and No. 3 are preferred because they are liquid and hence convenient to use. These silicates may also be used in combinations thereof.

The concentration of the alkali metal silicate solution varies depending on the kind of the compound used. The concentration of the alkali metal solution should be not higher than the saturated solution concentration at the temperature used. When the concentration is too low, a long time is required for drying, causing the decomposition of sodium percarbonate, and further a large amount of heat is required for drying. When the concentration is too high, on the other hand, it results in too high a viscosity of the coating solution and further may cause deposition of the solute, particularly silica, in the piping and the nozzle. In this respect, the concentration of the alkali metal silicate is preferably 5 - 50% by weight, more preferably 10 - 40% by weight, most preferably 10 - 35% by weight in terms of $SiO_2$. In using a water glass, which is liquid, though it may be used as such after reducing its viscosity by heating, it is usually sprayed after diluted with water.

The temperature of the alkali metal silicate solution, similarly to the temperature of the boric acid solution, is 10 - 120°C, preferaly 30 - 100°C, more preferably 50 - 100°C.

The amount of the alkali metal silicate as the coating agent is 0.1 - 10% by weight, preferably 0.2 - 7% by weight, most preferably 0.3 - 5% by weight in terms of $SiO_2$ relative to the sodium percarbonate particles of the base material.

In addition to the coating agents mentioned above, stabilizers, such as a chelating agent, known to the art may be used in combination therewith.

The average particle diameter of the sodium percarbonate particles of the base material is usually 100 - 2,000 $\mu$m, preferably 200 - 1,000 $\mu$m.

Although the ratio of boric acid ($H_3BO_3$) to the alkali metal silicate (in terms of $SiO_2$) is not specifically restricted, it is selected from the range of usually 10:1 - 1:5, preferably 8:1 - 1:2, most preferably 5:1 - 1:1, by weight.

The apparatus used for spraying and drying may be of any desired type so long as it enables spraying and drying to be performed simultaneously; preferred, however, is the type in which the objective particles are fluidized by hot air. In the process of the present invention the sodium percarbonate paraticles after the coatig operation usually contain 0.5 - 4% by weight of water, which are further dried to a moisture content of 0.2% by weight or less to give the final product.

The spraying and drying may be performed in any of the batch-wise, continuous, or semicontinuous operation. To attain uniform coatings, however, the batch-wise operation is most prefered.

According to the process of the present invention, the surface of sodium percarbonate particles can be coated evenly with boric acid and an alkali metal silicate, whereby water or other decomposition promoting substances can be interrupted from sodium percarbonate.

Although sodium percarbonate usually tends to be decomposed when incorporated into various detergents, sodium percarbonate coated according to the present invention are highly stable even in such detergent compositions.

The process of the present invention is described further in detail below with reference to Examples, Comparative Example and Referential Examples. The "%" in the Examples means "% by weight" unless stated otherwise.

Example 1

Initially, 8 kg of sodium percarbonate of an average particle diameter of 500 $\mu$m was placed on a perforated plate of a fluidized bed dryer having two spray nozzles. The particles of sodium percarbonate were kept in a fluidized state by passing a hot air at 100°C therethrough from under the plate. A 15% aqueous boric acid solution at 90°C was sprayed at a rate of 80 g/min from a spray nozzle placed 40 cm above the perforated plate. Simultaneously, an aqueous water glass No. 1 solution (concentration: 15% in terms of $SiO_2$) at 90°C was sprayed at a rate of 20 g/min from the other spray nozzle placed 40 cm above the perforated plate. In this manner, the spraying of the two solution was continued for 33.3 minutes while the sodium percarbonate particles were being fluidized by hot air, the amount of boric acid and that of water glass relative to sodium percarbonate corresponding to 5.0% and 1.25% (in terms of $SiO_2$), respectively. During the time, the temperature of sodium percarbonate was maintained in the range of 50 - 70°C. After the spraying of the two solutions had been stopped, the introduction of the air was continued for further 10 minutes. After cooled, the sodium percarbonate particles thus coated were taken out. No agglomerate was observed at all.

The coated sodium percarbonate was mixed with a detergent and subjected to a storage stability test. The results are shown in Table 1.

The scanning electron photomicrograph of the coated soium percarbonate particle showed that the coating agent extended well to form a uniform coating.

The test for storage stability was made according to the following method.

Method for storage stability test

A mixture of a compact detergent available on the market and 10% of a coated sodium percarbonate was placed in a carton box and hermetically sealed with vinyl tape. The box was stored in a constant temperature bath kept at 35°C and 80% relative humidity for 28 days. The amount of active oxygen in the sample was determined by sodium thiosulfate titration (the $I_2$ formed from KI and peroxides being titrated).

The residual rate of active oxygen was calculated by the following equation.

Residual rate of active oxygen (%)
= (Active oxygen after storage ÷ active oxygen before storage) x 100

Example 2

A coated sodium percarbonate was obtained in the same manner as in Example 1 except that the concentration of water glass No. 1 was changed to 7.5% in terms of $SiO_2$ (the amount of boric acid and that of water glass relative to sodium percarbonate corresponding to 5.0% and 0.62%, respectively). The sodium percarbonate was mixed with a detergent and subjected to the storage stability test. The results are shown in Table 1.

Example 3

The procedures in Example 1 were repeated except that spraying was carried out as follows. After spraying, from a spray nozzle, a 15% aqueous boric acid solution at 90°C at a rate of 100 g/min for 26.7 minutes (the amount of boric acid relative to sodium percarbonate corresponding to 5.0%) the spraying was stopped. Subsequently, an aqueous water glass No. 1 solution at 90°C (of a concentration of 15% in terms of $SiO_2$) was sprayed from a separate nozzle at a rate of 100 g/min for 6.7 minutes (the amount of water glass relative to sodium percarbonate corresponding to 1.3% in terms of $SiO_2$). The results of the storage stability test of the coated sodium percarbonate thus obtained are shown in Table 1.

Example 4

The same procedures as in Example 3 were followed except that the aqueous water glass solution was sprayed first and then the aqueous boric acid solution was sprayed. The results of the storage stability test of the coated sodium percarbonate thus obtained are shown in Table 1.

Example 5

The same procedures as in Example 1 were followed except that the temperature of hot air was elevated and the temperature of sodium percarbonate was maintained in the range of 91 - 100°C. The scanning electron photomicrograph of the coated sodium percarbonate particle showed that minute crystals had grown in the form of whisker on the particle surface. The results of the storage stability test of the coated sodium percarbonate are shown in Table 1.

5

Example 6

The same procedures as in Example 1 were follwed except that the temperature of hot air was lowered and the temperature of sodium polycarbonate was maintained in the range of 40 - 50°C. The sodium percarbonate thus coated contained about 5% of agglomerates (unable to pass a 10 mesh screen). The results of the storage stability test of the coated sodium percarbonate are shown in Table 1.

Comparative Example 1

The same procedures as in Example 3 were followed except that the spraying of aqueous water glass No. 1 solution was omitted. The results of the storage stability test of the coated sodium percarbonate thus obtained are shown in Table 2.

Comparative Example 2

The same procedures as in Example 3 were followed except that the spraying of aqueous boric acid solution was omitted. The results of the storage stability test of the coated sodium percarbonate thus obtained are shown in Table 2.

Comparative Example 3

The storage stability of the sodium percarbonate before coating used in Example 1 was tested and the results are shown in Table 2.

Referential Example 1

Eighty (80) grams of a 15% aqueous boric acid solution at 90°C and 20 g of an aqueous water glass No. 1 solution (of a concentration of 15% in terms of $SiO_2$) at 90°C were mixed. Immediately the whole turned into the form of gel.

Table 1

| Example No. | Active oxygen residual rate (%) | | |
|---|---|---|---|
| | Detergent A | Detergent B | Detergent C |
| 1 | 94.2 | 95.1 | 96.0 |
| 2 | 90.4 | 92.3 | 93.1 |
| 3 | 92.2 | 93.0 | 93.7 |
| 4 | 93.8 | 94.1 | 94.9 |
| 5 | 85.6 | 87.8 | 89.2 |
| 6 | 87.3 | 88.5 | 89.0 |

Table 2

| Comparative Example No. | Active oxygen residual rate (%) | | |
|---|---|---|---|
| | Detergent A | Detergent B | Detergent C |
| 1 | 75.1 | 79.8 | 82.4 |
| 2 | 30.5 | 35.2 | 36.6 |
| 3 | 10.8 | 12.1 | 14.6 |

## Claims

1. A process for producing a stabilized sodium percarbonate comprising separately spraying an aqueous boric acid solution and an aqueous alkali metal silicate solution onto sodium percarbonate particles kept in a fluidized state to coat the sodium percarbonate particles with the boric acid and alkali metal silicate.

2. A process for producing a stabilized sodium percarbonate according to claim 1, wherein the concentration of the aqueous boric acid solution is 10 - 95% of its saturated solution concentration and that of the aqueous alkali metal solution is 5 - 50% by weight in terms of $SiO_2$.

3. A process for producing a stabilized sodium percarbonate according to claim 1, wherein the amount of boric acid is 0.3 - 20% by weight relative to sodium percarbonate and that of the alkali metal silicate is 0.1 - 10% by weight in terms of $SiO_2$ relative to sodium percarbonate.

7

4. A process for producing a stabilized sodium percarbonate according to claim 1, wherein the average particle diameter of the sodium percarbonate particles to be coated is 100 - 2,000 $\mu$m.

5. A process for producing a stabilized sodium percarbonate according to claim 1, wherein the temperature of sodium percarbonate is maintained at 30 - 100°C.

**Patentansprüche**

1. Verfahren zum Erzeugen eines stabilisierten Natriumpercarbonats, in dem eine wäßrige Borsäurelösung und eine wäßrige Alkalimetallsilikatlösung auf in einem fluidisierten Zustand gehaltene Natriumpercarbonatteilchen gesprüht werden, die dadurch mit der Borsäure und dem Alkalimetallsilikat überzogen werden.

2. Verfahren zum Erzeugen eines stabilisierten Natriumpercarbonats nach Anspruch 1, in dem die Konzentration der wäßrigen Borsäurelösung 10 bis 95 % ihrer Sättigungskonzentration beträgt und die Konzentration der wäßrigen Alkalimetallösung 5 bis 50 Gew.-% SiO$_2$ entspricht.

3. Verfahren zum Erzeugen eines stabilisierten Natriumpercarbonats nach Anspruch 1, in dem auf das Natriumpercarbonat bezogen die Menge der Borsäure 0,3 bis 20 Gew.-% beträgt und die Menge des Alkalimetallsilikats 0,1 bis 10 Gew.-% SiO$_2$ entspricht.

4. Verfahren zum Erzeugen eines stabilisierten Natriumpercarbonats nach Anspruch 1, in dem der durchschnittliche Teilchendurchmesser der zu überziehenden Natriumpercarbonatteilchen 100 bis 2000 Mikrometer beträgt.

5. Verfahren zum Erzeugen eines stabilisierten Natriumpercarbonats nach Anspruch 4, in dem das Natriumpercarbonat auf einer Temperatur von 30 bis 100°C gehalten wird.

**Revendications**

1. Un procédé pour la préparation d'un percarbonate de sodium stabilisé, comprenant la pulvérisation séparée d'une solution aqueuse d'acide borique et d'une solution aqueuse de silicate de métal alcalin sur des particules de percarbonate de sodium maintenues à l'état fluidisé pour enrober les particules de percarbonate de sodium avec l'acide borique et le silicate de métal alcalin.

2. Un procédé de préparation d'un percarbonate de sodium stabilisé selon la revendication 1, dans lequel la concentration de la solution aqueuse d'acide borique est de 10 à 95 % de la concentration de sa solution saturée et celle de la solution aqueuse de silicate de métal alcalin est de 5 à 50 % en poids en termes de SiO$_2$.

3. Un procédé de préparation d'un percarbonate de sodium stabilisé selon la revendication 1, dans lequel la proportion d'acide borique est de 0,3 à 20 % en poids, relativement au percarbonate de sodium, et celle du silicate de métal alcalin est de 0,1 à 10 % en poids en termes de SiO$_2$, relativement au percarbonate de sodium.

4. Un procédé de préparation d'un percarbonate de sodium stabilisé selon la revendication 1, dans lequel le diamètre moyen des particules des particules de percarbonate de sodium à enrober est de 100 à 2 000 $\mu$m.

5. Un procédé de préparation d'un percarbonate de sodium stabilisé selon la revendication 1, dans lequel la température du percarbonate de sodium est maintenue entre 30 et 100°C.